# EUROPÄISCHE PATENTANMELDUNG

(11) **EP 4 674 588 A2**
(43) Veröffentlichungstag der Anmeldung: **07.01.2026**
(21) Anmeldenummer: 25184669.7
(22) Anmeldetag: 23.06.2025
(51) Int. Cl.: B29C 45/17, B29C 45/84

(54) **SPRITZGIESSEINHEIT UND MASCHINE ZUR VERARBEITUNG VON KUNSTSTOFFEN**

(30) Priorität: 04.07.2024 DE 102024118976
(71) Anmelder: ARBURG GmbH + Co KG, 72290 Loßburg (DE)
(72) Erfinder: BLETSCHER, Rainer, 72270 Baiersbronn (DE); SCHILLI, Christoph, 77781 Biberach (DE)
(74) Vertreter: RPK Patenanwälte Reinhardt und Kaufmann Partnerschaft mbB (Pforzheim)

(57) **Zusammenfassung**

Eine Spritzgießeinheit für eine Maschine zur Verarbeitung von Kunststoffen und anderer plastifizierbarer Massen ist über wenigstens ein Aufnahmeelement dazu eingerichtet, entlang einer Spritzachse (a-a) axial beweglich gegenüber dem Maschinenständer (20) gelagert zu sein. In einem Betriebszustand ist die Spritzgießeinheit 10 an einer Aufnahmeplatte (14) der Maschine festgesetzt. Dem Aufnahmeelement ist wenigstens eine Abstützsicherung ( 46) zugeordnet, die dazu eingerichtet ist, die Spritzgießeinheit quer zur Spritzachse abzustützen und die im Betriebszustand funktionslos ist.

## Beschreibung

Die Erfindung betrifft eine Spritzgießeinheit für eine Maschine zur Verarbeitung von Kunststoffen und anderer plastifizierbarer Massen, insbesondere eine Spritzgießmaschine, mit den Merkmalen nach dem Oberbegriff des Anspruches 1 sowie eine derartige Maschine mit den Merkmalen des Oberbegriffes des Anspruches 13.

Der Begriff "plastifizierbares Material", wie er hier verwendet wird, ist weit zu verstehen und umfasst insbesondere, aber nicht nur, neben Kunststoffen oder auch Silikon oder anderen thermoplastischen und/oder elastomeren Werkstoffen z.B. keramische, metallische und/oder pulverige Massen ebenso wie Papier, Cellulose, Stärke, Kork, usw. sowie auch Mischmaterialen zwischen derartigen plastifizierbaren Materialien. Grundsätzlich kann es sich dabei auch um bereits zuvor plastifizierte Materialien oder auch plastische Massen handeln, die nach dem Ausbringen selbsttätig oder unter Einsatz von Hilfsmitteln aushärten. Der Begriff umfasst auch Recyclate.

Der Begriff "Betriebszustand", wie er hier verwendet wird, beschreibt einen Zustand der Maschine, in dem die Maschine insbesondere zur Herstellung von Teilen betrieben werden kann, also produktionsfähig ist. Kein Betriebszustand liegt insbesondere vor, wenn die Maschine gewartet wird, ein Servicefall vorliegt oder eine Umrüstung z.B. auf eine andere Förderschnecke stattfindet. In der Regel ist ein Betriebszustand damit gleichzusetzen, dass eine Spritzgießeinheit an einem stationären Formträger oder einem Aufnahmeelement festgesetzt ist.

Der Begriff "funktionslos", wie er hier verwendet wird, beschreibt einen Zustand, in dem das jeweilige Bauteil seine grundsätzlich vorgesehene Funktion nicht ausführen kann, weil es im Moment außer Funktion ist. Verwendet wird der Begriff in Verbindung mit der Abstützsicherung der Spritzgießeinheit. Insofern kann und muss die Abstützsicherung außer Funktion die Spritzgießeinheit nicht abstützen Solch eine funktionslose Abstützsicherung ist vergleichbar mit den Stützrädern an einem Fahrrad, d.h. sie wird erst dann funktionstüchtig, wenn tatsächlich ein Kippen eintritt. Damit stört diese Abstützsicherung im normalen Betriebszustand nicht den Betrieb.

Herkömmliche Spritzgießmaschinen zur Verarbeitung von Kunststoffen und anderer plastifizierbarer Materialien, wie z.B. Spritzgießmaschinen, umfassen neben einer Formschließeinheit insbesondere eine Spritzgießeinheit zur Aufbereitung, Mischung und Homogenisierung eines in ein in der Formschließeinheit aufgenommenen Spritzgießwerkzeug einzuspritzenden plastifizierbaren Materials. Die vorliegende Offenbarung beschäftigt sich mit der Lagerung einer Spritzgießeinheit auf einem Maschinenständer.

Üblicherweise werden zur Lagerung von Spritzgießeinheiten lineare Führungssysteme verwendet. In der Regel werden hierzu doppelte Führungssysteme rechts und links der Spritzgießeinheit auf einem stabilen Bereich des Maschinenständers eingesetzt. Diese außenliegenden Führungssysteme werden mittels Traversen oder Aufnahmeelementen über Bauteile verbunden, die geometrisch enge und aufwändige Toleranzmaße aufweisen, um dadurch ein einwandfreies Führungsverhalten zu realisieren. Häufig umfasst die Traverse bzw. das Aufnahmeelement noch eine Drehlagerung, um ein Schwenken der Spritzgießeinheit aus ihrer Arbeitsposition entlang der Spritzachse in eine Wartungsposition für eventuelle Service- und Wartungsarbeiten zu ermöglichen. Eine derartige Spritzgießeinheit ist z.B. aus der DE 10 2012 010 010 A1 bekannt.

Bei größeren Spritzgießeinheiten sind auch zentrale Systeme bekannt, die zur Abstützung der Spritzgießeinheit eine massive Basis im mittleren Bereich des Unterbaus erfordern. Dies wird über das Einbringen von massiven Trägersystemen umgesetzt, die die technische Nutzung des Raumes unter der Spritzgießeinheit stark einschränken.

Die DE 20 2006 012 268 U1 offenbart ein Einspritzaggregat, welches mit einer Antriebseinheit sowie einem im hinteren Teil angeordneten Antriebsblock auf Linearführungen in Bezug auf den Maschinenständer einer Spritzgießmaschine axial verfahrbar ist. Im vorderen Teil ist eine mittige formschlüssige Führung vorgesehen. Die Anpresskraft des Plastifizierzylinders an der Spritzgießform wird von einem Anpress- und Verschiebeantrieb aufgebracht. Dabei ist wenigstens eine Zylinderabstützung im Kopfbereich des Plastifizierzylinders vorgesehen. Die Anpresskraft ist momentfrei auf den Plastifizierzylinder einleitbar.

Aus der DE 42 27 335 C1 ist eine Kunststoff-Spritzgießmaschine mit einer Formschließeinheit und einer horizontal einspritzenden Spritzgießeinheit bekannt. In auf einen Formträger wahlweise aufspannbare Spritzgießformen kann das Kunststoffmaterial mittels einer quer zur Spritzachse in horizontaler Richtung auf einem Träger verschiebbaren Spritzgießeinheit eingespritzt werden. Beim Verschieben der Spritzgießeinheit sind die freien Enden von Kolbenstangen der Antriebszylinder am Formträger geführt. Der Träger ist durch ein in Richtung der Spritzachse angeordnetes Schienenpaar gebildet, das beim Verschieben auf quer zur Spritzachse angeordneten Schienen frei gleitet.

In der WO 2020/025331 A1 wird eine Plastifiziereinheit für eine Spritzeinheit einer Spritzgießmaschine mit einem unterhalb des Zylinders angeordneten und mit diesem verbundenen Tragelement beschrieben. Zur Vereinfachung der Einstellung der Düsenmitte ist ein Fixierelement vorgesehen, welches das dem Zylinder abgewandte Ende des Tragelements so umgibt, dass ein Abstand zwischen Fixierelement und Tragelement vorliegt. Zwischen Fixierelement und Tragelement sind mehrere Stellelemente vorgesehen, welche dazu ausgebildet sind, eine kraft- und/oder formschlüssige Verbindung zwischen Fixierelement und Tragelement erzeugen und die Position des Tragelements relativ zu dem Fixierelement in einer Ebene orthogonal zur Zylinderachse einstellen zu können. Die Plastifiziereinheit kann mit ihrem Fixierelement in ein mit dem Maschinenbett verbundenen Spann- und Positioniersystem ein- und ausgespannt werden. Beim Wechsel der Plastifiziereinheit bleibt eine einmal vorgenommene Einstellung der Düsenmitte erhalten, weil die Plastifiziereinheit zusammen mit dem Fixierelement aus- und eingebaut wird.

Die CN 105805307 A offenbart eine Vorrichtung zur Bewegung und Drehung einer Einspritzeinheit. Die Vorrichtung löst das technische Problem, dass dann, wenn ein Rotationsteil der bestehenden Injektionsmaschine ein großes Volumen hat, dies für die Rotation ungünstig ist und die Bewegungs- und Einspritzpräzision beeinflusst. Die Vorrichtung umfasst Linearführungen in Form von Schienen, die entlang einer axialen Richtung fest an einem Einspritzmaschinenrahmen angeordnet sind, eine Rotationsstützbasis, die sich oberhalb der Linearführungen befindet, eine Einspritzeinheit, die fest an der Rotationsstützbasis angeordnet ist, und eine Gleitbaugruppe, die an der Unterseite der Rotationsstützbasis angeordnet und gleitend mit den Linearführungen verbunden ist. Dabei ist die Mitte des hinteren Endes der Rotationsstützbasis an der Gleitbaugruppe angelenkt und das vordere Ende kann horizontal auf der Gleitbaugruppe in einem voreingestellten Rotationsbereich rotieren. Die Linearführungen sind immer an der Gleiteinheit befestigt, so dass eine hohe Bewegungspräzision der Einspritzbasis und eine hohe Einspritzpräzision der gesamten Einspritzmaschine gewährleistet sind.

Aus der DE 10 2017 005 404 A1 ist eine Spritzgießmaschine bekannt, umfassend eine Haupteinspritzvorrichtung und eine Nebeneinspritzvorrichtung, die geschmolzenes Harz entlang einer zu der Öffnungs-/Schließ-Richtung des Formwerkzeugs rechtwinkligen Richtung in das Formwerkzeug einspritzt, ein Nebenmaschinenunterteil, das die Nebeneinspritzvorrichtung abstützt, und eine Kopplungseinheit, die auf einem Maschinenunterteil vorgesehen ist und das Maschinenunterteil und das Nebenmaschinenunterteil aneinanderkoppelt. Die Kopplungseinheit umfasst ein Unterteil, das auf dem Maschinenunterteil vorgesehen ist, zwei an dem Unterteil befestigte feste Blöcke, eine Führungsstange, die durch die zwei festen Blöcke parallel zu der Öffnungs- und Schließrichtung des Formwerkzeugs ein Brücke bildet, und einen beweglichen Block, der verschiebbar auf der Führungsstange montiert ist. Der bewegliche Block ist mit dem Nebenmaschinenunterteil verbunden. Die Haupteinspritzvorrichtung und die Nebeneinspritzvorrichtung sind jeweils auf paarweisen Linearführungen in Form von Schienen angeordnet.

Ausgehend von diesem Stand der Technik liegt der Erfindung die Aufgabe zugrunde, eine zentrale Abstützung einer Spritzgießeinheit mit trotz hoher Präzision einfachem Aufbau umzusetzen.

Diese Aufgabe wird durch eine Spritzgießeinheit für eine Maschine zur Verarbeitung von Kunststoffen und anderer plastifizierbarer Massen mit den Merkmalen des Anspruches 1 sowie durch eine derartige Maschinen mit den Merkmalen des Anspruches 13 gelöst.

Hierzu ist die Spritzgießeinheit für eine Maschine zur Verarbeitung von Kunststoffen und anderer plastifizierbarer Massen, wie insbesondere eine Spritzgießmaschine über wenigstens ein Aufnahmeelement dazu eingerichtet, entlang einer Spritzachse axial beweglich gegenüber dem Maschinenständer gelagert zu sein. In einem Betriebszustand ist die Spritzgießeinheit an einer Aufnahmeplatte wie z.B. einen stationären Formträger der Formschließeinheit der Maschine lösbar festsetzbar. Dem Aufnahmeelement ist wenigstens eine Abstützsicherung zugeordnet, die dazu eingerichtet ist, die Spritzgießeinheit quer zur Spritzachse abzustützen und die im Betriebszustand funktionslos ist.

Durch diese Ausgestaltung werden vorteilhaft die Voraussetzungen dafür geschaffen, die Lagerung der Spritzgießeinheit einerseits zu minimieren, andererseits aber für den Fall, dass die Spritzgießeinheit von der Aufnahmeplatte freigesetzt ist, gleichzeitig eine Abstützung wie vorzugsweise eine Kippsicherung bereitzustellen. Diese Abstützsicherung ist vergleichbar mit den Stützrädern an einem Fahrrad, d.h. sie wird erst dann funktionstüchtig, wenn tatsächlich ein Kippen eintritt. Damit stört diese Abstützsicherung im normalen Betriebszustand nicht den Betrieb.

Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Vorzugsweise ist genau ein Aufnahmeelement mittig unter der Spritzgießeinheit vorgesehen. Dies gestattet die gewünschte zentrale Abstützung der Spritzgießeinheit vorzugsweise parallel zur Hauptarbeitsachse bzw. zur Spritzachse und führt damit zu einer hohen Präzision in der Konzentrizität von Förderschnecke und Plastifizierzylinder. Gleichzeitig ist durch ein Aufnahme Element der Bewegungswiderstand bei einer axialen Bewegung der Spritzgießeinheit verringert.

Vorzugsweise ist die Abstützsicherung als Kippsicherungselement beidseits des Aufnahmeelements angeordnet und im Betriebszustand dazu eingerichtet, einen Abstand zum Maschinenständer aufzuweisen. Dadurch wird vorteilhaft sichergestellt, dass die Abstützsicherung nur zum Einsatz kommt, wenn z.B. im Rüst- und Servicefall die Spritzgießeinheit ihre Aufnahmeposition an der Aufnahmeplatte verlässt. Durch den vorhandenen vorzugsweise minimalen Abstand zum Maschinenständer ist das Kippsicherungselement ansonsten ohne Funktion. Dies bedeutet, dass im Betriebszustand vorteilhaft keine Beeinträchtigung entsteht, nach Freisetzen der Spritzgießeinheit von der Aufnahmeplatte aber eine Abstützsicherung und Kippsicherung gegeben ist.

Vorzugsweise hat das Kippsicherungselement gegenüber einem Grundkörper höhenverstellbare Kufen. Diese einstellbare Kufenlagerung hat den Vorteil, dass Fertigungstoleranzen sehr einfach ausgeglichen werden können und über eine vertikale Einstellung der flachen Kufen ein optimales Abstandsmaß zwischen Maschinenständer, d.h. vorzugsweise der Rollenlagerung, und Kufe justiert werden kann.

Die Abstützsicherung kann vorzugsweise auch durch eine in der Regel quer zur Spritzachse angeordnete Linearführung und ein darin formschlüssig geführtes Element wie z.B. einen Nutenstein und/oder einen Umgriff gebildet sein, wobei das Aufnahmeelement der Linearführung oder dem geführten Element zur gemeinsamen Bewegung gegenüber dem jeweils anderen dieser beiden Elemente zugeordnet ist. Eine derartige Linearführung hat den Vorteil, das durch die umgriffene Führung des geführten Elements sowohl eine Sicherung gegen ein Querverkippen als auch eine Absturzsicherung in Längsachse bauartbedingt gegeben sind. Gleichzeitig ist entlang der Linearführung eine Querverschiebung vorteilhaft im Service- oder Wartungsfall leicht möglich.

Vorzugsweise dient eine als stationärer Formträger ausgebildete Aufnahmeplatte im Betriebszustand der Spritzgießeinheit zur Befestigung. Befindet sich die Spritzgießeinheit nicht im Betriebszustand, weil z.B. die Förderschnecke gewechselt werden muss, ist sie hingegen vom stationären Formträger freigesetzt und durch die Abstützsicherung zuverlässig abgestützt.

Vorzugsweise ist die Spritzgießeinheit auf einer als Aufnahmeelement ausgebildeten zentralen Aufnahmewelle oder Zentralschiene abgestützt. Diese Aufnahmewelle hat vorzugsweise einen runden Querschnitt und gestattet vorteilhaft eine Linienberührung zwischen Spritzgießeinheit und Maschinenständer. In einer Zentralschiene kann eine Führung mit Nutenstein oder Umgriff erfolgen. All diese Lösungen führen vorteilhaft zu einer Leichtgängigkeit bei der translatorischen Bewegung der Spritzgießeinheit und ggf. ebenso bei einer Verschiebung quer zur Spritzachse z.B. im Servicefall.

Vorzugsweise ist die zentrale Aufnahmewelle oder die Zentralschiene parallel zur Spritzachse angeordnet, um vorteilhaft eine hohe Präzision zwischen Förderschnecke und Plastifizierzylinder zu gewährleisten, und/oder ist auf wenigstens einer quer dazu angeordneten drehbaren Rollenlagerung gelagert. Die Kombination aus drehbar gelagerter Rollenlagerung und einer quer dazu, vorzugsweise rechtwinklig darauf angeordneten, vorzugsweise zylindrischen Aufnahmewelle erhöht die Leichtgängigkeit der translatorischen Bewegung in axialer Richtung entlang der Spritzachse als auch bei einem horizontalen Verschieben quer dazu oder bei einem Verschwenken der Spritzgießeinheit im Servicefall.

Um vorteilhaft sicherzustellen, dass die Spritzgießeinheit bei ihrer Bewegung und beim Schwenken aufgrund der gegebenen Leichtgängigkeit nicht von ihrer Lagerung gezogen werden kann, ist die Spritzgießeinheit, vorzugsweise an der Aufnahmewelle mit einem Eingriffselement versehen, das in eine parallel zur Achse angeordnete Führung eingreift, um dadurch eine Absturzsicherung herzustellen.

Vorzugsweise weist die Führung eine Eingriffsöffnung auf, die größer als das Eingriffselement ist, um dadurch vorteilhaft ein Einführen des Eingriffselements in die Führung zu gestatten. Diese Eingriffsöffnung ist in einem Bereich vorgesehen, in dem der Schwerpunkt der Spritzgießmaschine aus Sicht der Aufspannplatte vor einer von der Aufspannplatte entferntesten Lagerung am Maschinenständer liegt. Vorzugsweise ist dadurch eine einfache Montage und Demontage der Spritzgießeinheit möglich, wobei gleichzeitig in der hinteren Endlage unabhängig von äußeren Einflüssen die Sicherheit für den Bediener vorteilhaft gewährleistet ist.

Vorzugsweise ist die Führung im montierten Zustand unter der Aufnahmewelle vorgesehen, so dass vorteilhaft eine einfache und durch ihre Anordnung innenliegende Absturzsicherung gewährleistet ist, ohne dass es zu zusätzlichen Quetsch- und Scherstellen für den Bediener infolge der versenkten Bauform kommen kann.

Um vorteilhaft eine einfache Höhenanpassung auf verschiedene Maschinenhöhen zu gewährleisten, ist die Spritzgießeinheit über höheneinstellbare oder höhenverstellbare Stellelemente an der Aufnahmewelle abgestützt.

Die Aufgabe wird auch durch eine Maschine zur Verarbeitung von Kunststoffen und anderer plastifizierbarer Massen, insbesondere eine Spritzgießmaschine, mit einem Maschinenständer und einer darauf angeordneten Spritzgießeinheit gelöst, die wie vorstehend beschrieben und aufgebaut ist und die genannten Vorteile aufweist.

Weitere Vorteile ergeben sich aus den Unteransprüchen und der nachfolgenden Beschreibung bevorzugter Ausführungsbeispiele.

Im Folgenden wird die Erfindung an Hand von in den beigefügten Figuren dargestellten Ausführungsbeispielen näher erläutert. Es zeigen
- Fig.1: eine dreidimensionale Ansicht auf einen Teil einer Maschine zur Verarbeitung von Kunststoffen und anderer plastifizierbarer Massen mit einer Spritzgießeinheit mit einer Abstützsicherung in einem ersten Ausführungsbeispiel sowie mit vergrößerten Ausschnitten A und B betreffend die Lagerung der Spritzgießeinheit,
- Fig. 2: eine Darstellung gemäß Fig. 1 mit einer Abstützsicherung in einem zweiten Ausführungsbeispiel sowie mit vergrößerten Ausschnitten C und D betreffend die Lagerung der Spritzgießeinheit,
- Fig. 3: eine Darstellung gemäß Fig. 1 mit einer Abstützsicherung in einem dritten Ausführungsbeispiel sowie mit vergrößerten Ausschnitten E und F betreffend die Lagerung der Spritzgießeinheit,
- Fig. 4: eine Darstellung gemäß Fig. 1 mit einer Abstützsicherung in einem vierten Ausführungsbeispiel sowie mit vergrößerten Ausschnitten G und H betreffend die Lagerung der Spritzgießeinheit,
- Fig. 5: eine Darstellung gemäß Fig. 1 mit einer Abstützsicherung in einem fünften Ausführungsbeispiel sowie mit vergrößerten Ausschnitten I und J betreffend die Lagerung der Spritzgießeinheit,
- Fig. 6: eine Darstellung eines Teils der Spritzgießeinheit mit einem teilweisen Schnitt im Bereich der Absturzsicherung mit vergrößerten Ausschnitten K1 und K2 im Bereich der Führung der Absturzsicherung mit Eingriffselement und Eingriffsöffnung in verschiedenen Position,
- Fig. 7 - 9: dreidimensionale Darstellungen der Abstützsicherung mit Aufnahmewelle gemäß dem ersten bis dritten Ausführungsbeispiel,
- Fig. 10, 11: dreidimensionale Darstellungen der Abstützsicherung mit Zentralschiene gemäß dem vierten und fünften Ausführungsbeispiel mit einem vergrößerten Ausschnitt im Bereich der Drehlagerung,

### Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht. Ausführliche Beschreibung bevorzugter Ausführungsbeispiele

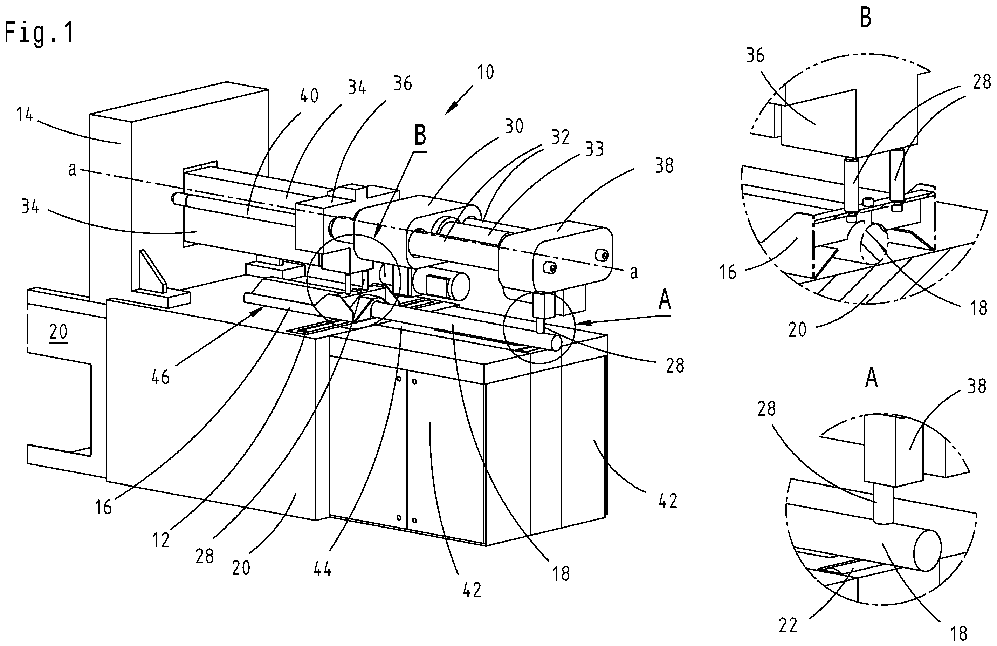

Die Fig. 1 bis 5 zeigen eine perspektivische Ansicht eines Teils einer Maschine zur Verarbeitung von Kunststoffen und anderer plastifizierbarer Massen, wie insbesondere pulverförmige und/oder keramische Massen in einem ersten bis fünften Ausführungsbeispiel, die sich durch unterschiedliche Abstützsicherungen 46 unterscheiden, worauf unten noch näher eingegangen wird. Erkennbar ist eine auf einem Maschinenständer 20 angeordnete Spritzgießeinheit 10, die an einer Aufnahmeplatte 14 der Maschine festsetzbar ist. Bei dieser Aufnahmeplatte 14 handelt es sich im Ausführungsbeispiel um die feststehende Formaufspannplatte einer im Übrigen zeichnerisch nicht dargestellten Formschließeinheit.

Aufbau und Betrieb einer Spritzgießmaschine sind dem Fachmann grundsätzlich bekannt. Einer Spritzgießeinheit 10 der Maschine werden Kunststoffe oder andere plastifizierbare Materialien zugeführt, die in einem Plastifizierzylinder 34 gemischt, plastifiziert und homogenisiert werden. Hierzu ist im Plastifizierzylinder 34 eine zeichnerisch nicht dargestellte Förderschnecke oder ein anderes geeignetes Fördermittel vorgesehen. Während des Plastifizierungsvorgangs wird im Falle einer Förderschnecke diese durch eine im Ausführungsbeispiel entlang von Führungen 32 geführte Dosiereinheit 30 rotiert, wobei vor dem Fördermittel bzw. der Förderschnecke plastifiziertes Material aufdosiert wird. Im Anschluss wird durch eine Axialbewegung des Fördermittels, die durch wenigstens eine Spindel 33 mittels einer Einspritzeinheit erfolgt, das plastifizierte Material in einen Formhohlraum einer zeichnerisch nicht dargestellten Spritzgießform eingespritzt, die sich in den Fig. 1 bis 5 auf der linken Seite auf der Rückseite der Aufnahmeplatte 14 befinden würde. In diesem Moment ist die Spritzgießform durch die Formschließeinheit geschlossen. Sobald das eingespritzte plastifizierte Material im Formhohlraum ausgehärtet ist, wird mittels der Formschließeinheit die Spritzgießform wieder geöffnet, so dass das Spritzteil entnommen werden kann. Dieser Prozess erfolgt zyklisch.

In den Fig. 1 bis 5 ist etwa mittig in der Spritzgießeinheit 10 ein Aufnahmegehäuse 36 vorgesehen, das über eine Abstützung auf dem Maschinenständer 20 abgestützt ist. Die Abstützung erfolgt im Ausführungsbeispiel über Stellelemente 28. In den Figuren links vom Aufnahmegehäuse 36 ist der Plastifizierzylinder 34 angeordnet und liegt mit einer zeichnerisch nicht dargestellten Düse an der Aufnahmeplatte 14, genauer gesagt über eine Ausnehmung in der Aufnahmeplatte 14 an der Einspritzöffnung der Spritzgießform an. Diese Darstellung entspricht einem Betriebszustand zur Herstellung von Spritzteilen.

Das Aufnahmegehäuse 36 ist über mehrere Holme bzw. Führungssäulen, im Ausführungsbeispiel über zwei Holme 40, mit der Aufnahmeplatte 14 lösbar verbunden. Am Aufnahmegehäuse 36 ist in den Figuren auf der rechten Seite mittig eine Spindel 33 einer Einspritzeinheit gelagert, die dazu eingerichtet ist, plastifiziertes Material zum Einspritzen zu dosieren. Auf den beiden Seiten der Spindel 33 befinden sich im Ausführungsbeispiel zwei Führungen für die Dosiereinheit 30, die ebenfalls am Aufnahmegehäuse 36 gelagert sind.

Rückseitig, das heißt in den Figuren auf der rechten Seite der Spritzgießeinheit 10, befindet sich ein gemeinsam mit der Spritzgießeinheit 10 bewegbarer Abstützkörper 38, der über wenigstens ein Stellelement 28 abgestützt ist.

Die verschiedenen Einheiten können über unterschiedliche Antriebsarten betrieben werden, wobei es sich z.B. um hydraulische, elektrische, pneumatische oder entsprechende Hybridformen dieser Antriebsarten handelt.

Den Ausführungsbeispielen ist gemeinsam, dass die Spritzgießeinheit 10 entlang einer Spritzachse a-a axial beweglich gegenüber dem Maschinenständer 20 über wenigstens ein Aufnahmeelement wie z.B. eine zentrale Aufnahmewelle 18 oder eine Zentralschiene 18' gelagert ist. Im Betriebszustand, also insbesondere während eines Spritzgießzyklus, ist die Spritzgießeinheit 10 an einer Aufnahmeplatte 14 wie insbesondere einem stationären Formträger der Maschine lösbar festgesetzt.

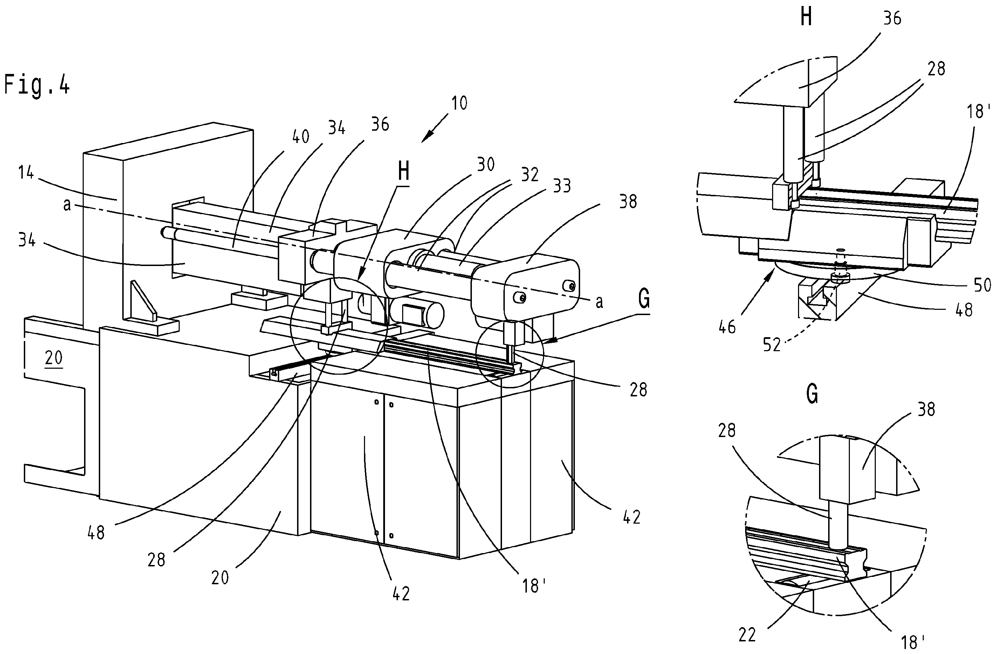

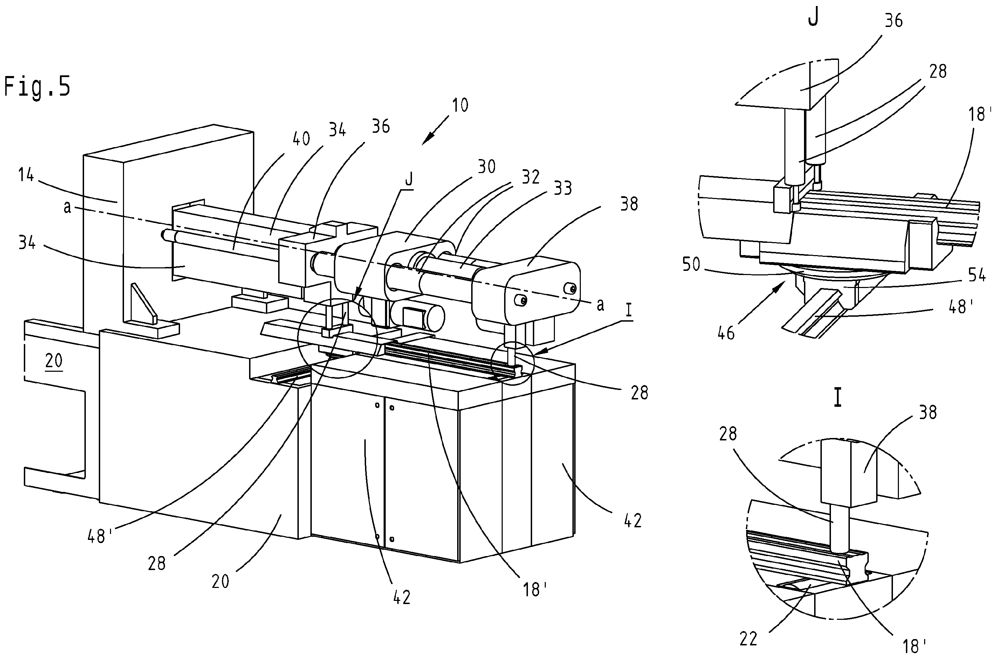

Die Figuren zeigen, dass dem Aufnahmeelement wenigstens eine Abstützsicherung 46 zugeordnet ist, die dazu eingerichtet ist, die Spritzgießeinheit quer zur Spritzachse abzustützen, und die im Betriebszustand funktionslos ist. Dadurch werden vorteilhaft die Voraussetzungen dafür geschaffen, die Lagerung der Spritzgießeinheit 10 einerseits zu minimieren, andererseits aber für den Fall, dass die Spritzgießeinheit 10 von der Aufnahmeplatte 14 freigesetzt ist, gleichzeitig eine Abstützung wie vorzugsweise eine Kippsicherung bereitzustellen. Vergleichbar zu den Stützrädern eines Fahrrads befindet sich die Abstützsicherung 46, wie z.B. Kippsicherungselemente 16, 16', 16" der Fig. 1 bis 3 oder Linearführungen 48, 48' der Fig. 4, 5, im Betriebszustand, in dem die Spritzgießeinheit 10 an der Aufnahmeplatte 14 befestigt ist, außer Funktion, so dass eine bedarfsweise Bewegung der Spritzgießeinheit 10 nur zwischen Aufnahmeelement und Maschinenständer 20 erfolgt. Wird die Spritzgießeinheit jedoch vom der Aufnahmeplatte 14 freigesetzt, wird bereits nach einer leichten seitlichen Bewegung die Spritzgießeinheit durch die Abstützsicherung zuverlässig abgefangen, die dann in Funktion kommt. Damit stört diese Abstützsicherung 46 im normalen Betriebszustand nicht den Betrieb.

Vorzugsweise ist genau ein Aufnahmeelement mittig unter der Spritzgießeinheit 10 vorgesehen, da dann mit geringem Widerstand eine Bewegung, insbesondere parallel zur Spritzachse a-a möglich ist. Insbesondere die Fig. 1 bis 3 und 7 bis 9 zeigen dazu die zentrale Aufnahmewelle 18.

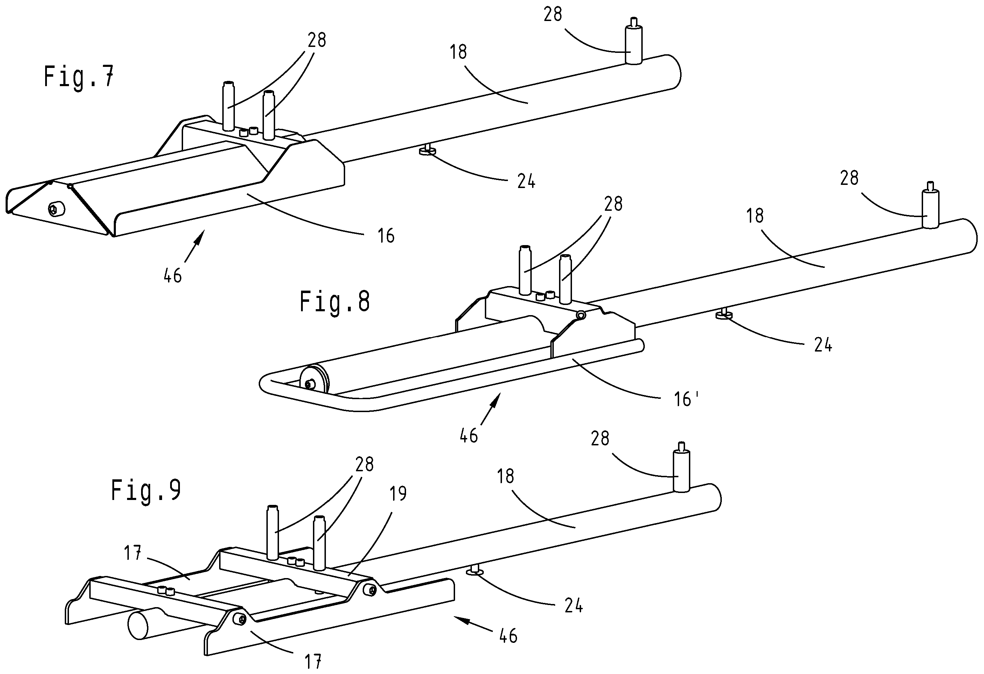

Im ersten Ausführungsbeispiel der Fig. 1, 7 ist die Abstützsicherung 46 durch ein Kippsicherungselement 16 als eine Blechbügellösung ausgebildet, die sich im Ausführungsbeispiel über die zentrale Aufnahmewelle 18 erstreckt, wie in Ausschnitt und Fig. 7 zu erkennen ist, und beidseits der Aufnahmewelle 18 in Blechkanten übergeht, die sich im Betriebszustand knapp oberhalb des Maschineständers 20 befinden.

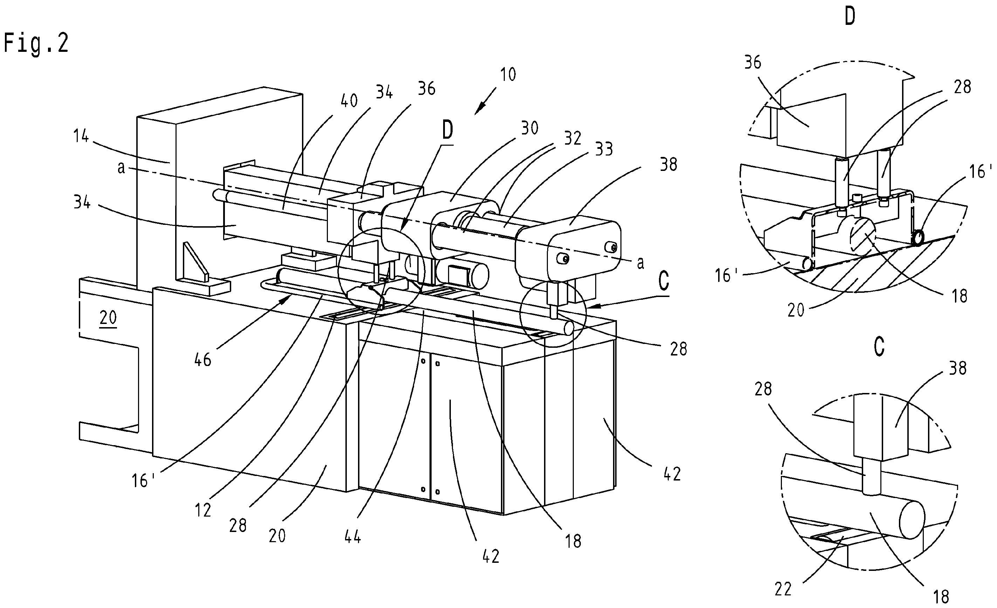

Im zweiten Ausführungsbeispiel der Fig. 2, 8 ist die Abstützsicherung 46 durch ein Kippsicherungselement 16' in Form eines Rohrbügels gebildet. Er befindet sich ebenfalls im Betriebszustand knapp oberhalb des Maschinenständers. Der Rohrbügel ist mit dem Aufnahmeelement, der zentralen Aufnahmewelle 18, gemäß Ausschnitt D und Fig. 8 verbunden.

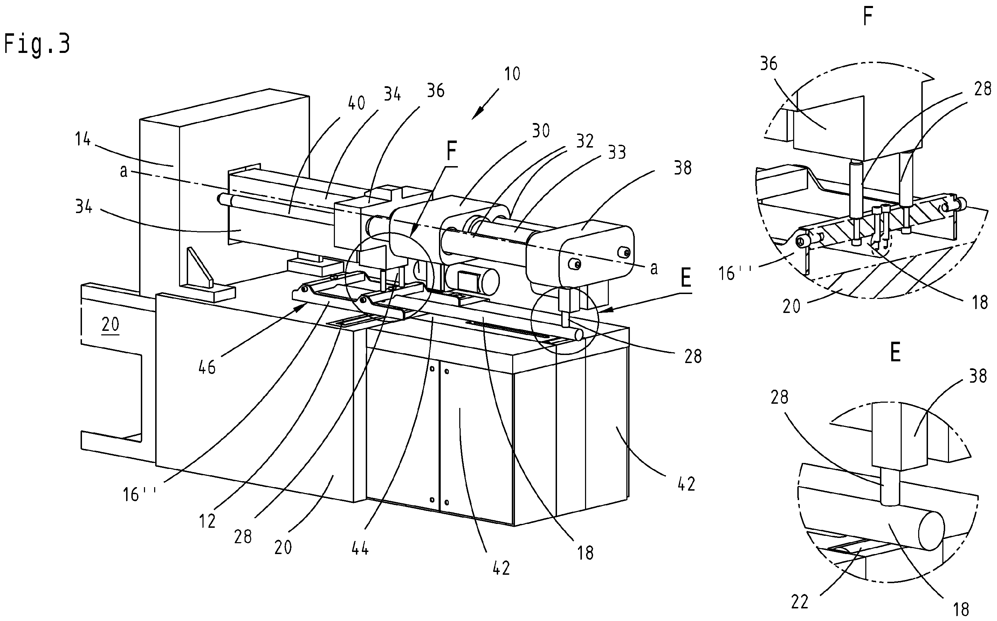

Die Fig. 3, 9 zeigen eine Abstützsicherung 46 in einem dritten Ausführungsbeispiel. Als Abstützsicherung 46 werden dabei höhenverstellbare Kufen 17 als Kippsicherungselement 16" verwendet, die gemäß Fig. 9 gegenüber einem Grundkörper 19 einstelbbar und insbesondere höhenverstellbar sind. Diese einstellbare Kufenlagerung hat den Vorteil, dass Fertigungstoleranzen sehr einfach ausgeglichen werden können und über eine vertikale Einstellung der flachen Kufen 17ein optimales Abstandsmaß zwischen Maschinenständer 20, d.h. vorzugsweise einer Rollenlagerung 12, und Kufe 17 justiert werden kann.

Wie in den Figuren zu erkennen, befindet sich die Abstützsicherung als Kippsicherungselement 16, 16', 16" beidseits des Aufnahmeelements im Betriebszustand mit Abstand zum Maschinenständer 20, um vorteilhaft die gewünschte Funktionslosigkeit im Betriebszustand der Spritzgießeinheit und die gewünschte Funktion außer Betrieb bereitzustellen.

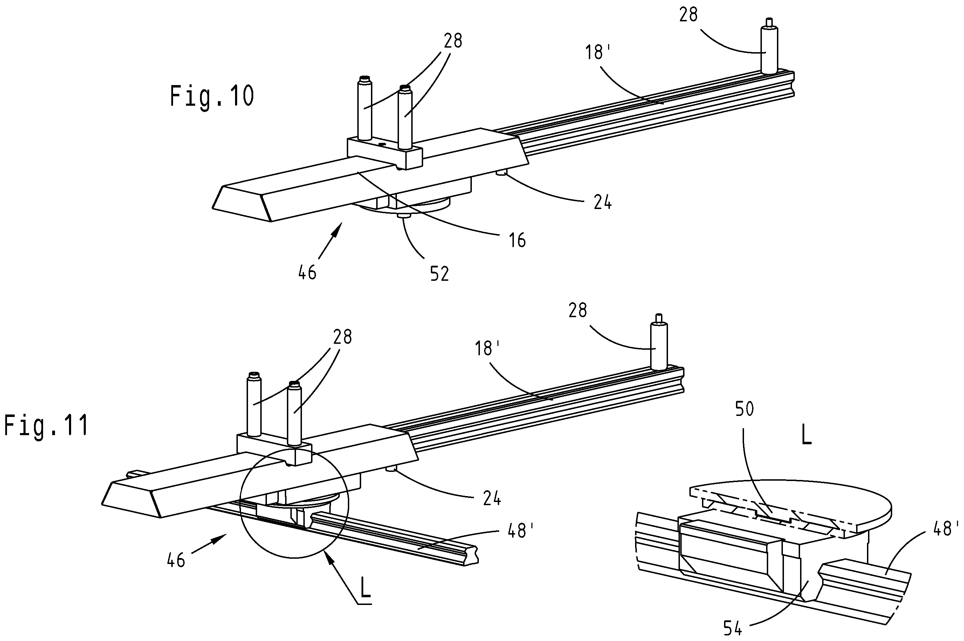

Im vierten Ausführungsbeispiel der Fig. 4, 10 als auch im fünften Ausführungsbeispiel der Fig. 5, 11 ist die Abstützsicherung 46 durch eine vorzugsweise quer, im den Ausführungsbeispielen im rechten Winkel zur Spritzachse a-a und damit auch zum Aufnahmeelement angeordnete Linearführung 48, 48' gebildet, die mit einem darin oder daran formschlüssig geführten Element zusammenwirkt. Im vierten Ausführungsbeispiel der Fig. 4 ist diese geführte Element gemäß Ausschnitt H ein Nutenstein 52, der im Ausführungsbeispiel über eine Drehlagerung 50 mit einer Zentralschiene 18' als Aufnahmeelement zusammenwirkt. Wie in Ausschnitt H der Fig. 4 oder in Fig. 10 zu erkennen, stützt sich das Aufnahmegehäuse 36 der Spritzgießeinheit 10 in diesem Bereich auf der Zentralschiene 18' über Stellelement 28 ab. Grundsätzlich kann dazu die Zentralschiene 18' als Aufnahmeelement sich entweder mit dem geführten Element (Nutenstein 52) gemeinsam oder mit der Linearführung 48, 48' gemeinsam gegenüber dem jeweils anderen dieser beiden Elemente bewegen.

Wird im vierten Ausführungsbeispiel der Fig. 4, 10 die Spritzgießeinheit 10 z.B. in einem Service- oder Wartungsfall von der Aufnahmeplatte 14 freigesetzt, ist sie infolge der Abstützsicherung 46 mittels des in der Linearführung 48 geführten Nutensteins 52 gegen ein Querverkippen gehalten. Gleichzeitig ist die Spritzgießeinheit 10, wenn sie auf der Zentralschiene 18' als Aufnahmeelement nach hinten - in den Figuren nach rechts - gezogen wird, um z.B. Montagearbeiten durchzuführen, gegen ein Abstürzen durch diese umgriffene Lagerung gesichert. Um die Spritzgießeinheit aus der Spritzachse a-a zu verschwenken, bewegt sich der Nutenstein 52 in der Linearführung 48 nach links oder rechts, wobei die Spritzgießeinheit gleichzeitig an der Drehlagerung 50 drehbar gelagert ist. Das hintere Ende der Spritzgießeinheit ist gleichzeitig auf der hinteren Rollenlagerung 22 (Ausschnitt G) beweglich gelagert und kann zusätzlich über ein Eingriffselement in einer Führung in axialer Richtung geführt sein (siehe unten).

Das fünfte Ausführungsbeispiel der Fig. 5, 11 unterscheidet sich vom vierten Ausführungsbeispiel dadurch, dass die als Aufnahmeelement ausgebildet Zentralschiene 18' an der Drehlagerung 50 gelagert ist und diese gemäß Fig. 5, Ausschnitt J, und Fig. 11, Ausschnitt L, mit einem Umgriff 54 an der Linearführung 48' geführt ist. Dieser Umgriff 54 hat den Vorteil, dass sowohl das Querverkippen als auch die Absturzsicherung in Längsachse bauartbedingt gegeben sind und gleichzeitig entlang der Linearführung 48' bei außer Betrieb befindlicher Spritzgießeinheit 10 eine Querverschiebung erfolgen kann.

In der Regel ist die Spritzgießeinheit 10 im Betriebszustand an einer als stationärer Formträger ausgebildeten Aufnahmeplatte 14 befestigt und außer Betriebszustand vom stationären Formträger freigesetzt, um z.B. Umrüst- und Wartungsarbeiten auszuführen..

Die zentrale Aufnahmewelle 18 ist parallel zur Spritzachse a-a angeordnet und/oder auf wenigstens einer quer dazu angeordneten drehbaren Rollenlagerung 12, 22 gelagert. Die hintere Rollenlagerung 22 ist in den Fig. 1, Ausschnitt A, Fig. 2, Ausschnitt C, Fig. 3, Ausschnitt E, Fig 4, Ausschnitt G und Fig. 5, Ausschnitt I zu erkennen. Die vordere Rollenlagerung 12 ist z.B. in den Fig. 1 bis 3 zu sehen. Die hintere Rollenlagerung 22 stützt damit über das Aufnahmeelement die Spritzgießeinheit 10 in einem von der Aufnahmeplatte 14 der Spritzgießeinheit 10 beabstandeten hinteren Bereich ab, die vordere Rollenlagerung 12 etwa mittig.

Im vierten und fünften Ausführungsbeispiel der Fig. 4 und 5 ist die vordere Rollenlagerung 12 durch die Linearführungen 48, 48' ersetzt, die der Spritzgießeinheit eine vergleichbare Beweglichkeit, allerdings geführt verleihen.

Das Zusammenspiel von Linienführung mittels der zentralen Aufnahmewelle 18, gelagert auf quer, vorzugsweise rechtwinklig dazu angeordneten Rollenlagerungen 12, 22, bzw. mittels einer Zentralschiene, geführt auf quer, vorzugsweise rechtwinklig dazu angeordneten Linearführungen 48, 48' in Verbindung mit der hinteren Rollenlagerung 22, führt dazu, dass selbst größere Spritzgießeinheiten leichtgängig bewegt werden können.

Die Kombination aus drehbar gelagerter Rollenlagerung und rechtwinklig darauf angeordnete zylindrische Aufnahmewelle 18, ist der Garant für eine gute Leichtgängigkeit der translatorischen Bewegung der Spritzgießeinheit 10. Ferner ermöglicht die Linienberührung der beiden rechtwinkligen Achsen ein einfaches horizontales Verschieben der SPE im Servicefall. Die vertikal einstellbare Doppelrollenlagerung bildet zudem eine stabile Basis für die weitere Lagerung der Spritzgießeinheit 10.

Spritzgießeinheiten bilden mit Schnecke, Schneckenkupplung und Einspritzachse (z.B. elektrisch als Spindel oder hydraulisch als Hydraulikzylinder) eine zentrale (mittige) Antriebsachse, die das Herzstück in der Kunststoffaufbereitung und Einspritzung ist. Um in dieser Achse eine optimale Lage und Positionsgenauigkeit zu realisieren, ist die so konstruktiv mögliche zentrale Abstützung ideal.

Ausgehend von der zentralen Achse a-a (Schnecke, Kupplung Spindel) wird damit eine biegesteife zylindrische Aufnahmewelle 18 oder eine Zentralschiene über präzise als Stellelemente 28 ausgebildete Abstandshalter (siehe Fig. 1 bis 5 und 7 bis 11), welche an den im Spritzgießprozess stationären Bauteilen, d.h. Aufnahmegehäuse 36 und hinterer Abstützkörper 38, angebracht werden, in einen ausgerichteten, vorzugsweise parallelen Abstand gebracht. Dieser Abstand muss beim Einsatz der Spritzgießeinheit 10 auf verschiedenen Maschinengrößen variiert werden, was entweder über unterschiedliche Längen der Präzisionsabstandshaltebolzen oder über einstellbare Gewindebolzen erfolgen kann. Dazu sind die Stellelemente 28 höheneinstellbar oder höhenverstellbar.

Vorteilhaft ist eine exakte Parallelität der Aufnahmewelle 18 zur zentralen Spritzachse a-a, um höchste Präzision bzw. Qualität im Prozess und möglichst geringe Verschleißwerte zu erreichen.

Sobald die Spritzgießeinheit 10 z.B. im Servicefall die Aufnahmeposition an der Aufnahmeplatte 14 verlässt, könnte es aufgrund der fehlenden horizontalen Abstützung zum Kippen der ganzen Einheit kommen. Um dies zu vermeiden, ist im vorderen Bereich der Spritzgießeinheit 10 die genannte Abstützsicherung 46 in Form von Kippsicherungselementen 16, 16', 16" oder unter Verwendung der Linearführungen 48, 48' verbaut.

Die Kippsicherungselemente 16, 16', 16" sind vorzugsweise so ausgeführt, dass sie im Betriebszustand einen minimalen Abstand zur Rollenlagerung 12 von z.B. wenigen 1/100 oder 1/10 mm aufweisen. Damit entsteht im Arbeitsbereich keine Beeinträchtigung, beim Herausfahren aus den Aufnahmestücken an der Aufnahmeplatte 14 ist aber eine Kippsicherung gegeben. Die Kippsicherungselemente 16, 16', 16" sind von der Breite her so ausgeführt, dass ein sicherer Stand der Spritzgießeinheit 10 gewährleistet ist, aber gleichzeitig die Spritzgießeinheit 10 so weit auf der Rollenlagerung 12, 22 geschwenkt werden kann, dass ein Ein- und Ausbau von Schnecke und/oder Plastifizierzylinder im Servicefall ohne weiteres möglich ist.

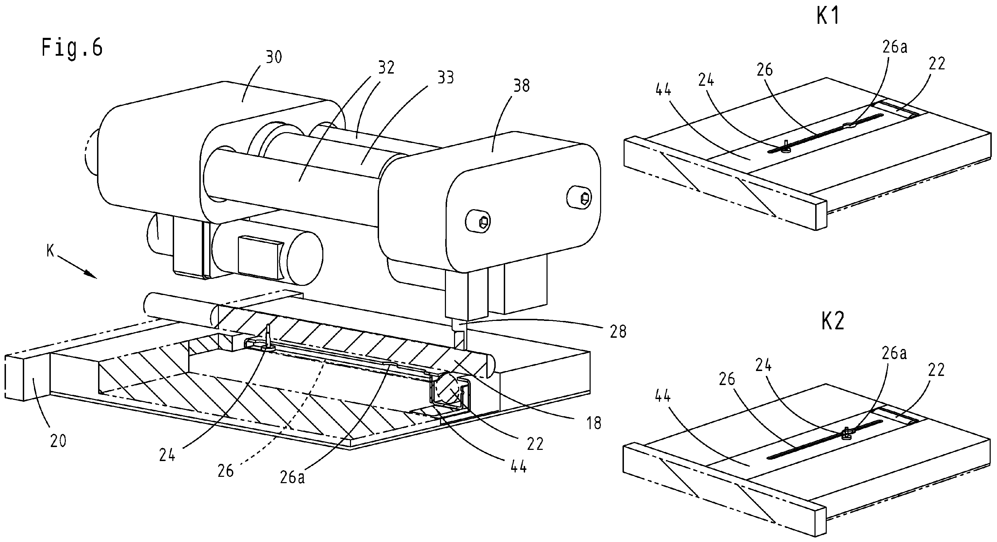

Damit die Spritzgießeinheit 10 beim Schwenken aufgrund der nun gegebenen Leichtgängigkeit nicht nach hinten von der Lagerung auf dem Maschinenständer gezogen wird, ist an der Aufnahmewelle 18 eine Absturzsicherung verbaut. Die Spritzgießeinheit 10 ist dazu gemäß Fig. 6 mit den Ausschnitten K1 und K2 mit einem Eingriffselement 24 in einer parallel zur Spritzachse a-a angeordneten Führung 26 gesichert, die als Absturzsicherung eingerichtet ist. Konkret kann das Eingriffselement 24 gemäß Fig. 6 ein Pilzkopf sein, der mit einer auf der Wellenlagerung als Führung 26 integrierten Führungsnut in Eingriff steht. Im Ausführungsbeispiel befindet sich die Führung 26 im montierten Zustand vorzugsweise unter der Aufnahmewelle 18, um dadurch konstruktiv durch die versenkte Bauform vorteilhaft Quetsch- und Scherstellen für den Bediener zu vermeiden. Ein umgekehrte Anordnung mit dem Eingriffselement 24 am Maschinenständer 20 und der Führung 26 am Aufnahmeelement 26 ist jedoch ebenso möglich wie eine nicht verdeckte Absturzsicherung.

Vorzugsweise lässt sich gemäß Fig. 6, Ausschnitte K1 und K2 über eine Eingriffsöffnung 26a, die größer als das Eingriffselement 24 ist, die Spritzgießeinheit 10 im vorderen Bereich einfach montieren und demontieren. In der hinteren und damit von der Aufnahmeplatte 14 beabstandeten Endlage ist unabhängig von äußeren Einflüssen eine (Absturz-)Sicherheit für den Bediener gewährleistet. Die Eingriffsöffnung 26a ist damit vorzugsweise in einem Bereich vorgesehen, in dem der Schwerpunkt der Spritzgießeinheit 10 aus Sicht der Aufspannplatte 14 vor einer von der Aufspannplatte entferntesten Lagerung am Maschinenständer 20 liegt.

Im Ausführungsbeispiel ist der Maschinenständer 20 so ausgebildet, dass er unter der Formschließeinheit und dem aus Sicht der Aufnahmeplatte 14 vorderen Teil der Spritzgießeinheit angeordnet ist. An diesem Maschinenständer 20 ist ein vorzugsweise dreieckförmiges Tragwerk 44 (Fig. 1, 2) in Längsrichtung mittig angeordnet, das dem hinteren Teil der Spritzgießeinheit 10 als Abstützung dient und an der bedarfsweise auf beiden Seiten die Schaltschränke 42 angeordnet sind (siehe ältere deutsche Patentanmeldung DE 10 2024 101 087.8). Das Tragwerk liegt vorzugsweise mit einer vertikalen Seite am Maschinenständer 20 an und bietet mit einer horizontalen Seite eine Abstützfläche für die Spritzgießeinheit. In dieser horizontalen Seite kann die drehbare Rollenlagerung 22 angeordnet sein.

Es versteht sich von selbst, dass diese Beschreibung verschiedensten Modifikationen, Änderungen und Anpassungen unterworfen werden kann, die sich im Bereich von Äquivalenten zu den anhängenden Ansprüchen bewegen.

### Bezugszeichenliste

- 10: Spritzgießeinheit
- 12: Rollenlagerung
- 14: Aufnahmeplatte
- 16, 16', 16": Kippsicherungselement
- 17: Kufe (Fig. 9)
- 18: zentrale Aufnahmewelle
- 18': Zentralschiene
- 19: Grundkörper (Fig. 9)
- 20: Maschinenständer
- 22: Rollenlagerung
- 24: Eingriffselement
- 26: Führung
- 26a: Eingriffsöffnung
- 28: Stellelement
- 30: Dosiereinheit
- 32: Führung
- 33: Spindel
- 34: Plastifizierzylinder
- 36: Aufnahmegehäuse
- 38: Abstützkörper
- 40: Holm
- 42: Schaltschrank
- 44: Tragwerk
- 46: Abstützsicherung
- 48, 48': Linearführung
- 50: Drehlagerung
- 52: Nutenstein
- 54: Umgriff
- a-a: Spritzachse

## Patentansprüche

1. Spritzgießeinheit für eine Maschine zur Verarbeitung von Kunststoffen und anderer plastifizierbarer Massen, insbesondere für eine Spritzgießmaschine, wobei die Spritzgießeinheit (10) über wenigstens ein Aufnahmeelement dazu eingerichtet ist, entlang einer Spritzachse (a-a) axial beweglich gegenüber einem Maschinenständer (20) gelagert zu sein und in einem Betriebszustand an einer Aufnahmeplatte (14) der Maschine lösbar festgesetzt zu sein,
**dadurch gekennzeichnet, dass** dem Aufnahmeelement wenigstens eine Abstützsicherung (46) zugeordnet ist, die dazu eingerichtet ist, die Spritzgießeinheit quer zur Spritzachse abzustützen, und die im Betriebszustand funktionslos ist.

2. Spritzgießeinheit nach Anspruch 1, **dadurch gekennzeichnet, dass** genau ein Aufnahmeelement mittig unter der Spritzgießeinheit (10) vorgesehen ist.

3. Spritzgießeinheit nach Anspruch 1 oder 2, **dadurch gekennzeichnet, dass** die Abstützsicherung als Kippsicherungselement (16, 16', 16") beidseits des Aufnahmeelements angeordnet und im Betriebszustand dazu eingerichtet ist, einen Abstand zum Maschinenständer (20) aufzuweisen.

4. Spritzgießeinheit nach Anspruch 3, **dadurch gekennzeichnet, dass** das Kippsicherungselement (16") gegenüber einem Grundkörper (19) höhenverstellbare Kufen (17) aufweist.

5. Spritzgießeinheit nach Anspruch 1 oder 2, **dadurch gekennzeichnet, dass** die Abstützsicherung (46) eine vorzugsweise quer zur Spritzachse angeordnete Linearführung (48, 48') und ein darin formschlüssig geführtes Element (Nutenstein (52), Umgriff (54)) umfasst, wobei das Aufnahmeelement der Linearführung (48, 48') oder dem geführten Element zur gemeinsamen Bewegung gegenüber dem jeweils anderen dieser beiden Elemente zugeordnet ist.

6. Spritzgießeinheit nach einem der vorhergehenden Ansprüche, **dadurch gekennzeichnet, dass** die Spritzgießeinheit (10) im Betriebszustand an einer als stationärer Formträger ausgebildeten Aufnahmeplatte (14) befestigbar ist und außer Betriebszustand vom stationären Formträger freisetzbar ist.

7. Spritzgießeinheit nach einem der vorhergehenden Ansprüche, **dadurch gekennzeichnet, dass** als Aufnahmeelement eine zentrale Aufnahmewelle (18) oder eine Zentralschiene (18') vorgesehen ist, an denen die Spritzgießeinheit (10) abgestützt ist.

8. Spritzgießeinheit nach Anspruch 7, **dadurch gekennzeichnet, dass** die zentrale Aufnahmewelle (18) oder die Zentralschiene (18') parallel zur Spritzachse (a-a) angeordnet und/oder dazu eingerichtet ist, auf wenigstens einer quer dazu angeordneten drehbaren Rollenlagerung (12, 22) zu lagern.

9. Spritzgießeinheit nach einem der vorhergehenden Ansprüche, **dadurch gekennzeichnet, dass** die Spritzgießeinheit (10) dazu eingerichtet ist, sich mit einem Eingriffselement (24) in einer parallel zur Spritzachse angeordneten Führung (26) zu sichern, die als Absturzsicherung eingerichtet ist.

10. Spritzgießeinheit nach Anspruch 9, **dadurch gekennzeichnet, dass** die Führung (26) eine Eingriffsöffnung (26a) aufweist, die größer als das Eingriffselement (24) ist und so in einem Bereich vorgesehen ist, dass ein Schwerpunkt der Spritzgießeinheit (10) aus Sicht der Aufnahmeplatte (14) vor einer von der Aufnahmeplatte entferntesten Lagerung am Maschinenständer (20) liegt.

11. Spritzgießeinheit nach Anspruch 9 oder 10, **dadurch gekennzeichnet, dass** die Führung (26) im montierten Zustand unter der Aufnahmewelle (18) vorgesehen ist.

12. Spritzgießeinheit nach einem der Ansprüche 7 bis 11, **dadurch gekennzeichnet, dass** die Spritzgießeinheit (10) über höheneinstellbare oder höhenverstellbare Stellelemente (28) an der Aufnahmewelle (18) abgestützt ist.

13. Maschine zur Verarbeitung von Kunststoffen und anderer plastifizierbarer Massen, insbesondere Spritzgießmaschine, mit einem Maschinenständer (20) und einer darauf angeordneten Spritzgießeinheit (10) nach einem der vorhergehenden Ansprüche, die entlang einer Spritzachse (a-a) axial beweglich gegenüber dem Maschinenständer (20) über wenigstens ein Aufnahmeelement gelagert ist und in einem Betriebszustand an einer Aufnahmeplatte (14) der Maschine lösbar festgesetzt ist,
**dadurch gekennzeichnet, dass** dem Aufnahmeelement wenigstens eine Abstützsicherung (46) zugeordnet ist, die dazu eingerichtet ist, die Spritzgießeinheit quer zur Spritzachse abzustützen und die im Betriebszustand funktionslos ist.
